(19) **Europäisches Patentamt**
**European Patent Office**
**Office européen des brevets**

(11) Veröffentlichungsnummer : **0 252 427 B1**

(12) **EUROPÄISCHE PATENTSCHRIFT**

(45) Veröffentlichungstag der Patentschrift :
**16.10.91 Patentblatt 91/42**

(51) Int. Cl.⁵ : **F24F 5/00, F24F 1/00,**
**H05K 7/20**

(21) Anmeldenummer : **87109475.1**

(22) Anmeldetag : **01.07.87**

(54) **Klimatisierter Arbeitsplatz.**

(30) Priorität : **09.07.86 DE 3623097**

(43) Veröffentlichungstag der Anmeldung :
**13.01.88 Patentblatt 88/02**

(45) Bekanntmachung des Hinweises auf die
Patenterteilung :
**16.10.91 Patentblatt 91/42**

(84) Benannte Vertragsstaaten :
**BE CH DE GB LI LU NL**

(56) Entgegenhaltungen :
**US-A- 4 351 475**
**US-A- 4 353 411**
**US-A- 4 378 727**

(73) Patentinhaber : **Stadler GmbH**
**Brockmannstrasse 14-17**
**W-6050 Offenbach (Main) (DE)**

(72) Erfinder : **Stadler, Werner**
**Brockmannstr. 17**
**W-6050 Offenbach (DE)**
Erfinder : **Stadler, Norbert**
**Koenigsbergerstr. 77**
**W-6056 Heusenstamm (DE)**

(74) Vertreter : **Kraus, Walter, Dr. et al**
**Patentanwälte Kraus, Weisert & Partner**
**Thomas-Wimmer-Ring 15**
**W-8000 München 22 (DE)**

**Beschreibung**

Die Erfindung betrifft einen Bildschirmarbeitsplatz mit mehreren dem Arbeitsplatz zugeordneten und im Bereich einer Arbeitsplatte angeordneten Bildschirmgeräten, die zu dem Arbeitsplatzmobiliar beabstandet sind und von Luft umströmt werden.

Weiterhin kann dieser Bildschirmarbeitsplatz noch andere wärmeerzeugende Geräte aufweisen, wie beispielsweise mehrere über- und/oder nebeneinander angeordnete elektronische Baueinheiten, die unterhalb der Arbeitsplatte des Bildschirmarbeitsplatzes angeordnet sind.

Entsprechende Arbeitsplätze rufen eine erhebliche Wärmebelastung eines Raumes und somit eine Belastung für die Mitarbeiter hervor. Insbesondere in Branchen wie bei Geld-, Wertpapier oder Rohstoffhändlern ist es erforderlich, auf engstem Raum eine Vielzahl von Arbeitsplätzen mit Bildschirmen zur Verfügung zu stellen. So ist es nicht ungewöhnlich, wenn in einem 200 m² großen Raum 50 Arbeitsplätze mit vorzugsweise zwei Bildschirmen pro Arbeitsplatz angeordnet sind. Pro Arbeitsplatz entsteht dabei eine Wärme zwischen 200 und 800 Watt, so daß in einem entsprechenden Raum Wärme in der Größenordnung von 35 Kilowatt frei wird, eine Wärme also, die dem Verbrauch eines Zweifamilienhauses entspricht. Um die Wärme zu vernichten, sind aufwendige Klimaanlagen erforderlich, die es notwendig machen, daß Zwischendecken eingezogen werden, um die Luft im gewünschten Umfang klimatisieren zu können. Hierdurch sind zusätzliche Baumaßnahmen erforderlich, wobei die Klimaanlage selbst einen gesonderten Raum der Fläche von 10 m² bedarf.

Auch wurde versucht, der Wärmeentwicklung dadurch entgegenzuwirken, daß die bereits bestehende Raumklimatisierung verstärkt ausgelegt wurde. Hierzu sind höhere Luftgeschwindigkeiten erforderlich, um einen rascheren Luftaustausch zu gewährleisten. Alternativ kann die Einströmtemperatur der Luft niedriger gewählt werden, um durch einen größeren Temperaturunterschied die anfallende Gerätewärme auszugleichen. Diese oder ähnliche Maßnahmen beeinträchtigen jedoch im erheblichen Umfang das Wohlbefinden der in diesen Räumen arbeitenden Menschen.

Ein Arbeitsplatz der eingangs genannten Art ist aus US-A-4 378 727 bekannt. Dieser umfaßt im wesentlichen eine horizontale Arbeitsplatte und mehrere vertikale Trennwände, welche den Arbeitsplatz von einem oder mehreren seitlich benachbarten sowie gegenüberliegenden Arbeitsplätzen abschirmen. Unter der Arbeitsplatte und der zwischen gegenüberliegenden Arbeitsplätzen verlaufenden Trennwand ist ein Luftkanal vorgesehen, der sich entlang dieser Trennwand erstreckt und einer Mehrzahl von paarweise gegenüber- sowie nebeneinanderliegenden Arbeitsplätzen gemeinsam ist. Dieser Luftkanal ist mit der Oberseite jeder Arbeitsplatte durch eine in der Mitte der Rückseite der jeweiligen Arbeitsplatte vorgesehene Arbeitsplattenöffnung verbunden und an die eine Seite, beispielsweise die Saugseite, einer Klimaeinrichtung angeschlossen, die entfernt von dem Arbeitsraum installiert ist, in welchem sich die Arbeitsplätze befinden. Der von der anderen Seite der Klimaeinrichtung, beispielsweise der Druckseite, zu dem Arbeitsraum zurückführende Luftkanal mündet in einer Wandöffnung des Arbeitsraums, die in der Nähe der Decke vorgesehen ist.

Bei dem Arbeitsplatz gemäß US-A-4 378 727 soll die Wärme, die auf der Arbeitsplatte durch Büromaschinen, wie beispielsweise Schreibmaschinen, Bildschirmgeräte u.dgl. erzeugt wird, mittels der Luft, welche durch die obige Arbeitsplattenöffnung in den Luftkanal abgesaugt wird, direkt abgeführt werden, d.h. ohne daß sie sich vorher im Arbeitsraum ausbreiten kann. Dieser Arbeitsplatz ist jedoch bezüglich der Abführung der dort erzeugten Wärme in mehrfacher Hinsicht problematisch:

Die Wärme, welche von den auf der Arbeitsplatte stehenden Bildschirmgeräten u.dgl. erzeugt wird, wird nur zum Teil direkt in den Luftkanal abgeführt, während ein beträchtlicher Teil dieser Wärme tatsächlich zunächst in den Arbeitsraum abgeführt wird, so daß dieser durch die Bildschirmgeräte u.dgl. zusätzlich ziemlich stark erwärmt wird. Diese Wärmeabführung in den Arbeitsraum ist einerseits durch die Luftströmungsverhältnisse und andererseits durch die Wärmeabstrahlungsverhältnisse bedingt. Aufgrund der Tatsache, daß die Bildschirmgeräte u.dgl. frei auf der Arbeitsplatte stehen, wird ein ganz beträchtlicher Anteil der in den Bildschirmgeräten u.dgl. erzeugten Wärme in die Umgebung, d.h. in den Arbeitsraum, abgestrahlt, so daß er die weiter entfernt befindliche Luft des Arbeitsraums entweder direkt oder über Wände, Decke, entferntes Mobiliar o.dgl. erwärmt. Auch der durch Wärmeübertragung an die unmittelbar die Bildschirmgeräte u.dgl. umgebende Luft abgeleitete Anteil wird aufgrund der Luftströmungsverhältnisse nur teilweise direkt in den Luftkanal abgeführt. Denn die auf der Arbeitsplatte befindlichen Bildschirmgeräte u.dgl. werden aufgrund der Tatsache, daß sie freistehend sind, in mehrfacher Hinsicht nur sehr unvollkommen von der der Arbeitsplattenöffnung zuströmenden Luft umströmt. Zum einen ergibt sich wegen des Freistehens der Bildschirmgeräte u.dgl. ein relativ großer Strömungsquerschnitt zwischen dem Arbeitsraum und der Arbeitsplattenöffnung, so daß die Strömungsgeschwindigkeit der an den Bildschirmgeräten u.dgl. vorbeiströmenden Luft relativ gering wird. Zum anderen kommt es bei weitem nicht dazu, daß die Bildschirmgeräte u.dgl. im wesentlichen allseitig von der Luft umströmt werden, so daß eine Wärmeabführung durch die Luft nur in relativ beschränktem Umfang stattfindet. Da sich die kühlere Luft wegen ihres größeren spezifischen Gewichts im unteren Bereich des Arbeitsraums ansammelt und daher bevorzugt die von der abgesaugten Luft hinterlassene Leere auffüllt, strömt die Luft der Arbeitsplattenöffnung vor allem schräg von unten und von der Seite her zu, dagegen kaum von oben her. Das hat nicht nur eine ziemlich einseitige Kühlung der Bildschirmgeräte u.dgl. zur Folge, sondern über den Bildschirmgeräten u.dgl. stehende Luft wird durch die relativ heiße Oberseite derselben erwärmt und steigt empor in den Arbeitsraum.

Dadurch, daß auf diese Weise ein erheblicher Teil der von den Bildschirmgeräten u.dgl. erzeugten Wärme zunächst in den Arbeitsraum eingespeist wird, anstatt unmittelbar in den Luftkanal abgeführt zu werden, kommt es nicht nur zu einer stärkeren Wärmebelastung der Arbeitsplatzbenutzer, die ja zum Beispiel der Wärmestrahlung der Bildschirmgeräte u.dgl. direkt ausgesetzt sind, sondern es müssen entsprechende Maßnahmen getroffen werden, um die erhöhte Wärmemenge aus dem Arbeitsraum abzuführen, die, wie weiter oben schon darin bestehen können, daß höhere Luftgeschwindigkeiten und/oder eine niedrigere Einströmtemperatur der Luft vorgesehen werden, wodurch das Wohlbefinden der Arbeitsplatzbenutzer beeinträchtigt wird. Will man diese Beeinträchtigung vermeiden, ist es erforderlich, zusätzliche Luftzuführungs- und -absaugöffnungen im Arbeitsraum vorzusehen und diese an die vorhandenen Luftkanäle, welche mit der entfernten Klimaeinrichtung verbunden sind, anzuschließen, wozu aufwendige konstruktive Veränderungen oder Baumaßnahmen erforderlich sind.

Ähnliche Arbeitsplätze sind in US-A-4 353 411 und in US-A-4 351 475 beschrieben, die aber noch weniger als der Arbeitsplatz gemäß US-A-4 378 727 für Bildschirmgeräte u.dgl. geeignet sind, weil sie im Gegensatz zu dem Arbeitsplatz nach US-A-4 378 727 keine Luftabsaugöffnung im Bereich der Arbeitsplatte besitzen.

So ist in US-A-4 353 411 eine Mehrzahl von flügelartig zusammengefügten Arbeitsplätzen beschrieben, die mit einer mittigen Hohlsäule verbunden sind, welche über eine im Fußboden des Arbeitsraums verlegte Luftleitung von einer entfernt vom Arbeitsraum vorgesehenen Klimaeinrichtung mit klimatisierter Luft gespeist wird. Diese klimatisierte Luft tritt im Bereich des oberen Endes der Hohlsäule, das auf einen weit oberhalb der Arbeitsplätze befindlichen Niveau vorgesehen ist, in den Arbeitsraum aus. In der Wand der Hohlsäule sind elektrische Anschlüsse für Bildschirmgeräte eingebaut. Jedoch sind keine speziellen Vorkehrungen zum Abführen der von den Bildschirmgeräten erzeugten Wärme getroffen, vielmehr muß die klimatisierte Luft in einer solchen Menge und mit einer solchen Temperatur zugeführt werden, daß sie die Arbeitsraumtemperatur trotz der von den Bildschirmgeräten in den Arbeitsraum abgestrahlten und abgeleiteten Wärme auf einem angenehmen Wert hält.

Bei dem in US-A-4 351 475 beschriebenen Arbeitsplatz wird die klimatisierte Luft in der Nähe des Fußbodens sowohl in den Arbeitsraum eingespeist als auch aus dem Arbeitsraum abgesaugt.

Ferner zeigen entsprechende Arbeitsplätze den Nachteil, daß durch die vorhandene installierte Raumbeleuchtung eine unerwünschte Spiegelung auf den Monitoren und eine nicht hinreichende Ausleuchtung der Arbeitsplätze erfolgt. Insbesondere zeigen sich die zuvor erwähnten Nachteile dann, wenn entsprechende Bildschirmarbeitsplätze in Räumen aufgestellt werden, deren Beleuchtung nicht auf jene ausgerichtet ist. So entsprechen die bisher üblichen Leuchteinbauten in den Decken oder unter diesen häufig nicht den Empfehlungen für Bildschirmarbeitsplätze (Abstrahlwinkel maximal 50°), so daß mit einer hohen Kostenbelastung eine Umrüstung erforderlich wäre. Dabei ist außerdem darauf zu achten, daß die Beleuchtung von Bildschirmarbeitsplätzen so ausgelegt werden sollte, daß möglichst nur der Arbeitsplatz mit der empfohlenen Lichtstärke (500 lux) ausgeleuchtet ist, wohingegen der übrige Raum geringer auszuleuchten ist, damit sich die durch das Betrachten der Bildschirme strapazierten Augen beim Aufblicken in dunklere Raumzonen erholen können

Aufgabe der vorliegenden Erfindung ist es u.a., einen Arbeitsplatz der eingangs angegebenen Art so auszubilden, daß problemlos die bei mit elektronischen Geräten ausgestatteten Arbeitsplätzen anfallende Abwärme abgeführt werden kann, ohne daß eine Belastung der Raumluft erfolgt und ohne daß selbst aufwendige konstruktive Veränderungen oder Baumaßnahmen erforderlich sind. Dabei soll es keine Rolle spielen, ob der Arbeitsplatz in einem bereits klimatisierten oder nicht klimatisierten Raum eingerichtet ist. Ferner soll die Aufgabe gelöst werden, daß eine optimale Beleuchtung des Arbeitsplatzes unabhängig der vorhandenen Raumbeleuchtung möglich ist.

Die Aufgabe wird erfindungsgemäß gelöst durch ein in den Arbeitsplatz integriertes Klimagerät, das die vorbeiströmende Luft ansaugt, wobei die Bildschirmgeräte im wesentlichen allseitig vom Arbeitsplatzmobiliar derart beabstandet sind, daß die Geräteabwärme nahezu vollständig über die vorbeiströmende Luft zum Klimagerät abgeführt wird.

Mit der Erfindung wird erreicht, daß Wärme erzeugendes Gerät wie Bildschirm und elektronische Baueinheiten im wesentlichen allseitig von Luft umströmbar sind, die über eine mit dem Arbeitsplatz integrierte Klimaeinrichtung absaugbar ist, und gegebenenfalls, daß in dem Arbeitsplatz eine Beleuchtung integriert ist, deren Strahlung von der Raumdecke auf den Platz derart reflektierbar ist, daß die Frontfläche des Monitors beschattet und die Arbeitsfläche ausgeleuchtet ist.

Erfindungsgemäß werden die Bildschirme und andere elektronische Geräte in die Arbeitsplatzmöbel so eingebaut, daß die Gerätewärme über ein in Arbeitsplatzmöbeln integriertes Klimagerät abgesaugt und auf die gewünschte Raumtemperatur zurückgekühlt wird, bevor eine Abgabe an den Raum erfolgt. Da die anfallende Gerätewärme unmittelbar an dem Entstehungsort zurückgekühlt wird, kann sie sich nicht mit der Raumluft zurückgekühlt wird, bevor eine Abgabe an den Raum erfolgt. Da die anfallende Gerätewärme unmittelbar an dem Entstehungsort zurückgekühlt wird, kann sie sich nicht mit der Raumluft vermischen.

Durch die integrierte Beleuchtung wird insbesondere für Branchen wie Geld-, Wertpapier- oder Rohstoffhandel bei gleichzeitiger Flexibilität der Arbeitsplätze eine bildschirmarbeitsplatzgerechte Beleuchtung zur Verfügung gestellt. Dabei ist die Beleuchtung arbeitsplatzgebunden und damit immer richtig positionierbar, ohne daß der Benutzer direkt in die Beleuchtung hineinblicken und damit geblendet werden kann und ohne daß Reflexionen auf den Monitoren entstehen. Die Beleuchtung selbst ist dabei unabhängig von der vorhandenen Raumbeleuchtung.

Durch die integrale Anordnung der Beleuchtung in dem Arbeitsplatz, und zwar derart, daß die Beleuchtung erwähntermaßen beim Sitzen nicht einsehbar ist, ist die Möglichkeit geschaffen, daß die Strahlung der Beleuchtung in einem entsprechenden Abstrahlwinkel z.B. 60°, der abhängig von Arbeitsgröße und Abstand zur gegebenenfalls abgehängten Decke ist, derart einzustellen, daß die indirekte Strahlung die Monitorfronten beschattet bei gleichzeitiger Ausleuchtung der Arbeitsflächen. So besteht die Möglichkeit, bei einer Arbeitsplatzanordnung von z.B. drei Doppelarbeitsplätzen, die eine Dreieckform mit konkav ausgebildeten Schenkeln bildet, drei Leuchten in einer abgesenkten Tischmittelzone zu installieren, wobei vorzugsweise Halogen- Metalldampflampen in jeder Voltausführung Verwendung finden. Die Leuchten können dann in den Ecken des von den Bildschirmreihen eingeschlossenen Dreiecks angeordnet werden. Sofern gleichzeitig die integrierte Klimaeinrichtung in diesem Bereich angeordnet ist, ergibt sich der Vorteil, daß die von der Beleuchtung anfallende Wärme unmittelbar abgeführt werden kann.

Die Steuerung des Klimagerätes selbst kann manuell über Fühler im Abluftstrom und/oder Zuluftstrom und/oder über Raumthermostate geregelt werden. Als Klimageräte selbst können bekannte Techniken wie Splittgeräte oder solche mit Wasserkühlung Verwendung finden.

Weiterbildungen der Erfindung sind in der abhängigen Patentansprüchen enthalten.

Weiter Einzelheiten und Vorteile der Erfindung ergeben sich aus der nachfolgenden Beschreibung von bevorzugten der Zeichnung zu entnehmenden Ausführungsbeispielen.

Es zeigen:

Fig. 1 eine Schnittdarstellung durch eine aus zwei Arbeitsplätzen bestehende Arbeitsplatzanordnung,
Fig. 2 eine Draufsicht auf die Arbeitsplatzanordnung nach Fig. 1,
Fig. 3 eine zu einem Dreieck zusammengesetzte Arbeitsplatzanordnung,
Fig. 4 eine zu einem Viereck zusammengesetzte Arbeitsplatzanordnung,
Fig. 5 eine Ausgestaltung der Arbeitsplatzanordnung nach Fig. 3,
Fig. 6 eine weitere Ausführungsform eines Arbeitsplatzes und
Fig. 7 einen Schnitt durch den Arbeitsplatz nach Fig. 6.

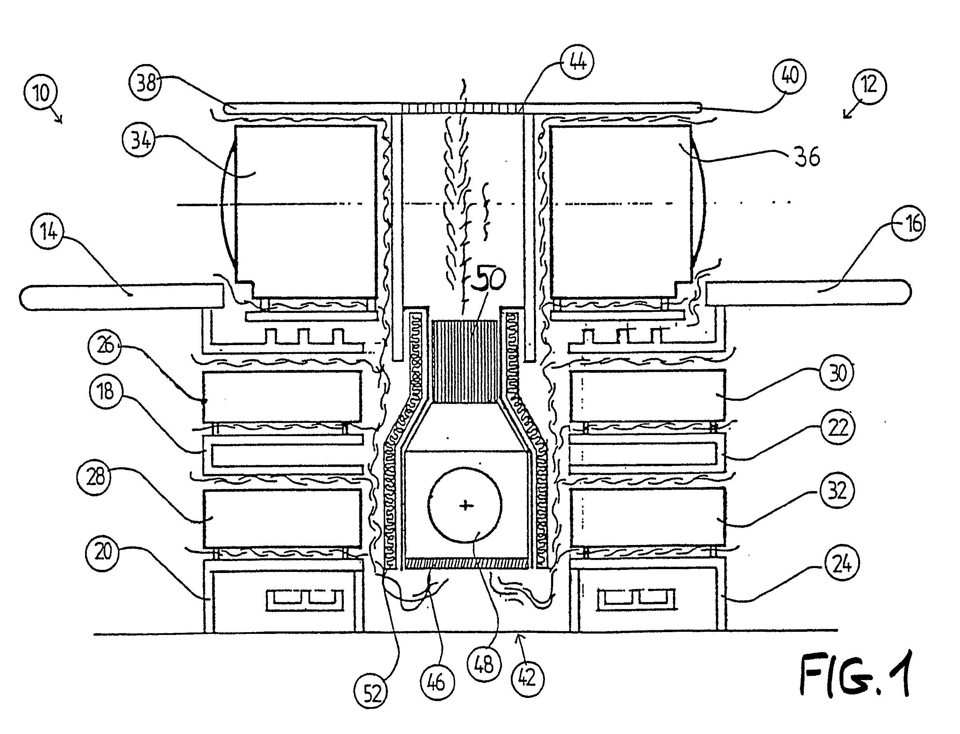

In Fig. 1 ist in Schnittdarstellung eine erfindungsgemäße Arbeitsplatzanordnung dargestellt, die zwei rückseitig aneinanderstoßende Arbeitsplätze 10 und 12 umfaßt. Als Arbeitsplatz werden dabei einheitliche Arbeitsplatzmöbel verstanden, auch wenn an diesem mehr als eine Person tätig sein sollte.

Jeder Arbeitsplatz 10 bzw. 12 weist eine Arbeitsplatte 14 und 16 auf, unterhalb und zur Rückseite hin versetzt mehrere auf Zwischenböden 18 , 20 bzw. 22 und 24 angeordnete elektronische Geräte 26 , 28 , 30 und 32 untergebracht sind, die zum Beispiel zur Datenspeicherung, -empfang und -verarbeitung erforderlich sind. Diesen ist ihrerseits ein Bildschirmgerät 34 bzw. 36 zugeordnet, das in etwa auf der Höhe der Arbeitsplatte 14 bzw. 16 angeordnet ist. Der Bildschirm 34 bzw. 36 oder auch Monitor genannt ist oberseitig von jeweils einer Abdeckplatte 38 bzw. 40 beabstandet abgeschirmt.

Wie die zeichnerische Darstellung gut erkennen läßt, sind der Bildschirm 34 bzw. 36 und die elektronischen Geräte 26 , 28 , 30 und 32 allseitig zu dem Arbeitsplatzmobiliar beabstandet, um so von Luft umspült zu werden. Diese Luft, die die von den Geräten stammende Wärme aufnimmt, wird nun über ein zwischen den Arbeitsplätzen 10 und 12 angeordnetes Klimagerät 42 abgesaugt. Das Klimagerät 42 ist integraler Bestandteil der Arbeitsplätze 10 und 12 und damit deren Arbeitsplatzanordnung. Die an den Geräten 26 , 28 , 30 , 32 bzw. Monitoren 34 und 36 vorbeiströmende Luft wird von dem Klimagerät 42 aufgenommen und nach deren Rückkühlung auf Raumtemperatur zwischen den Abdeckungen 38 und 40 durch ein Gitter 44 abgegeben.

Durch die erfindungsgemäße Lehre wird demzufolge die an den Arbeitsplätzen 10 und 12 entstehende Gerätewärme die Raumtemperatur nicht mehr erhöhen, sondern wird über das Klimagerät 42 auf die Raumtemperatur abgekühlt.

Bei dem Klimagerät 42 kann es sich um ein konventionelles Gerät bekannter Bauart handeln. Im vorliegenden Fall umfaßt das Klimagerät 42 bodenseitig einen Filter 46 , über den die die Gerätewärme aufnehmende Luft über einen Radiallüfter 48 in das Klimagerät 42 angesaugt wird. Die von dem Klimagerät 42 angesaugte Luft wird dann über einen Verdampfer 50 heruntergekühlt, um -wie erwähnt- über das Gitter 44 an den Raum abgegeben zu werden, in dem die Arbeitsplätze 10 und 12 angeordnet sind. Damit das Klimagerät 42 nicht zu einer unerwünschten Lärmbelästigung führt, ist es von einer Schalldämmung 52 umgeben, die gleichzeitig als Wärmeisolation dient.

Sofern die von den Geräten 26 , 28 , 30 und 32 bzw. Bildschirmen 34 , 36 stammende Wärme zur Beheizung des Raumes -zum Beispiel im Winter- dienen soll, kann im Klimagerät 42 ein nicht dargestelltes Register angeordnet sein, über das die angesaugte Luft im gewünschten Umfang erwärmt wird, oder in das, falls erforderlich, eine Luftbefeuchtung integriert werden kann.

Man erkennt aus der zeichnerischen Darstellung desweiteren, daß die Arbeitsplatten 14 und 16 zu den Monitoren 34 und 36 ebenfalls beabstandet sind, so daß zwischen der Arbeitsplatte 14 bzw. 16 und dem entsprechenden Monitor 34 bzw. 36 Luft entlangströmen kann, um so sicherzustellen, daß die Geräteabwärme nahezu vollständig über die vorbeiströmende Luft abgeführt werden kann.

Die die elektronischen Geräte 26 , 28 bzw. 30 und 32 aufnehmenden Zwischenböden 18 , 20 bzw. 22 , 24 bilden jeweils ein Gestell, das so konstruiert ist, daß ebenfalls die Gerätewärme sicher abgeführt werden kann. Dies soll durch die zwischen den Geräten und Böden vorhandenen Freiräume und die in diesen angedeutete Luftströmung verdeutlicht werden.

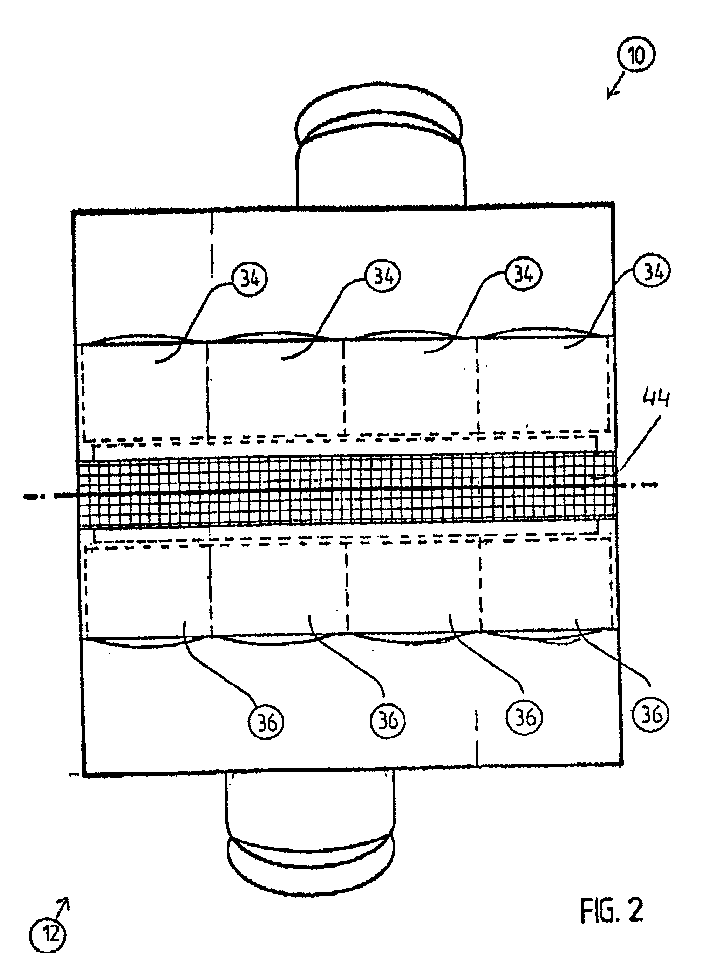

In Fig. 2 ist eine Draufsicht der Arbeitsplatzanordnung nach Fig. 1 wiedergegeben. Man erkennt die Arbeitsplätze 10 und 12 , an denen im Ausführungsbeispiel jeweils eine Person arbeiten kann. Jeder Arbeitsplatz ist dabei mit vier Monitoren 34 bzw. 36 ausgerüstet, so daß ersichtlich wird, daß eine enorme Geräteabwärme anfällt, die über das Klimagerät 42 abgesaugt und auf die Raumtemperatur heruntergekühlt wird. Auch erkennt man deutlich das zwischen den Rückseiten der Arbeitsplätze 10 und 12 vorhandene Abluftgitter 44 , durch das die rückgekühlte von den Geräten stammende Luft in den Raum zurückgeführt wird.

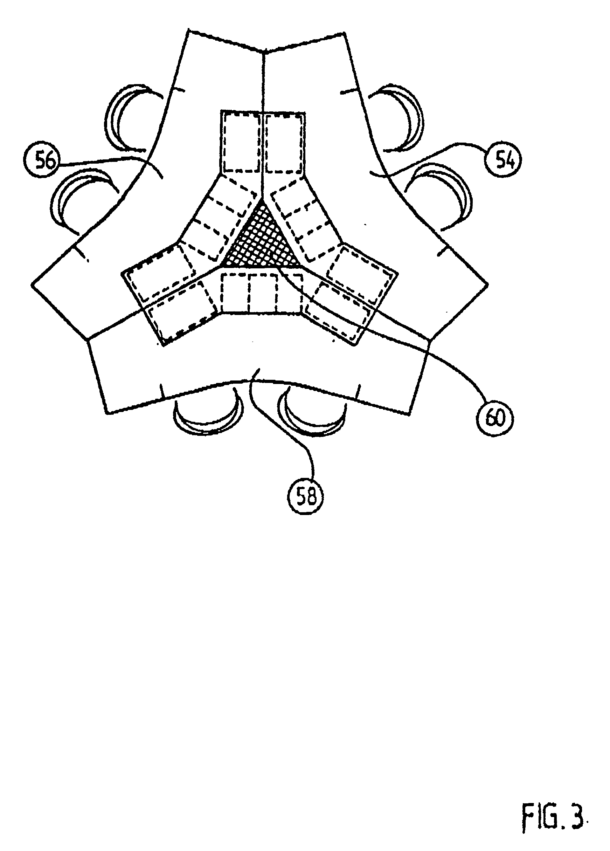

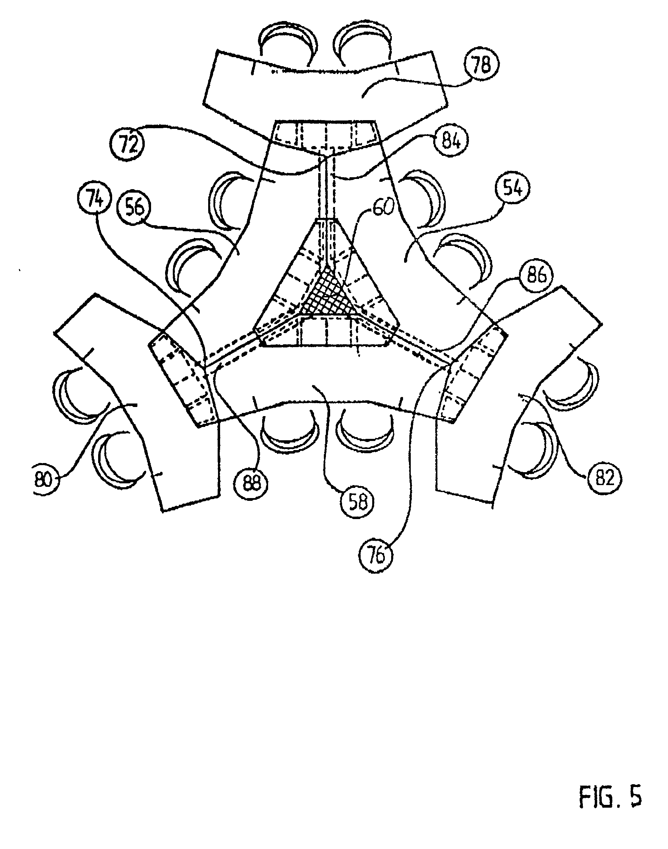

In Fig. 3 ist eine besonders hervorzuhebende Arbeitsplatzanordnung dargestellt, die aus drei Arbeitsplätzen 54 , 56 und 58 zusammengestellt ist, an denen jeweils zwei Personen tätig sein können. Im Mittelpunkt 60 der Arbeitsplatzanordnung befindet sich ein nicht dargestelltes Klimagerät, um die an den einzelnen Arbeitsplätzen 54 , 56 und 58 anfallende Wärme abzusaugen und zu temperieren. Diese Ausführungsform ist auch ohne Klimaanlage als eigenerfinderischer Vorschlag - ebenso wie die Fig. 5 - zu bezeichnen.

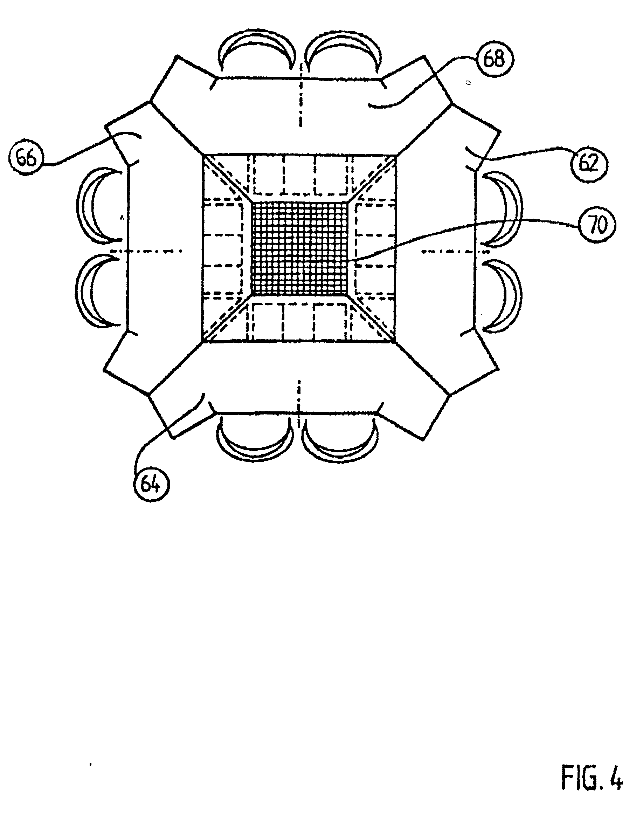

Im Ausführungsbeispiel der Fig. 4 sind vier Arbeitsplätze 62 , 64 , 66 und 68 in Draufsicht zu einem Art Quadrat zusammengesetzt, in dessen Mitte ein nicht dargestelltes Klimagerät als deren integraler Bestandteil angeordnet ist. Die von dem Klimagerät stammende Abluft wird über ein Gitter 70 an die Umgebung abgegeben.

In Fig. 5 ist eine besonders hervorzuhebende Variante der Ausführungsform nach Fig. 3 wiedergegeben. Die Basis dieser Arbeitsplatzanordnung wird aus den Arbeitplätzen 54 , 56 und 58 gebildet, die zu einem Dreieck zusammengestellt sind, in dessen Mittelpunkt 60 das erwähnte Klimagerät angeordnet ist. In den Ecken 72 , 74 und 76 des Dreiecks sind als sogenannte Satelliten weitere Arbeitsplätze 78 , 80 und 82 angeordnet, deren Aufbau den anderen entspricht. Die von diesen Arbeitsplätzen 78 , 80 und 82 stammende Wärme wird nun über ein -gestrichelt dargestelltes- Schlauchsystem 84 , 86 , 88 zu dem im Mittelpunkt 60 angeordneten Klimagerät angesaugt, so daß auch insoweit davon gesprochen werden kann, daß die Arbeitsplatzanordnung mit Basisarbeitsplätzen 54 , 56 und 58 sowie Satelliten-Arbeitsplätzen 78 , 80 und 82 als integralen Bestandteil ein im Mittelpunkt vorhandenes Klimagerät aufweist, über die die an den einzelnen Arbeitsplätzen anfallende Gerätewärme angesaugt und auf die gewünschte Temperatur gekühlt wird.

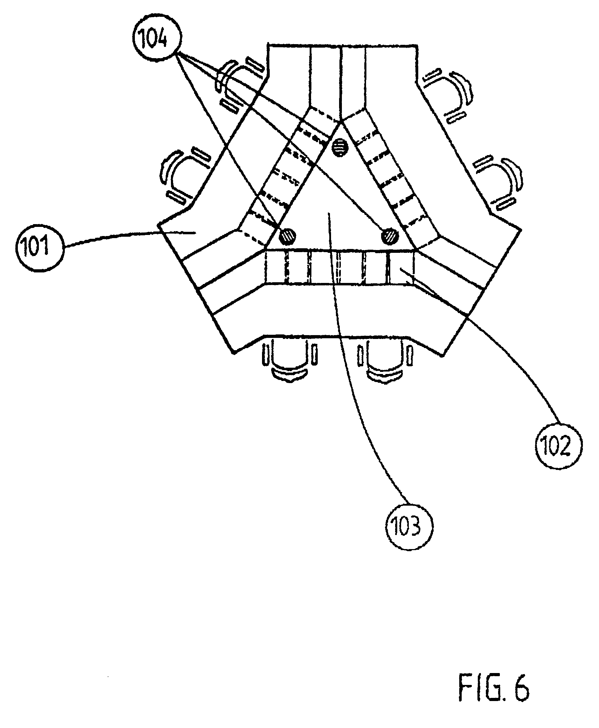

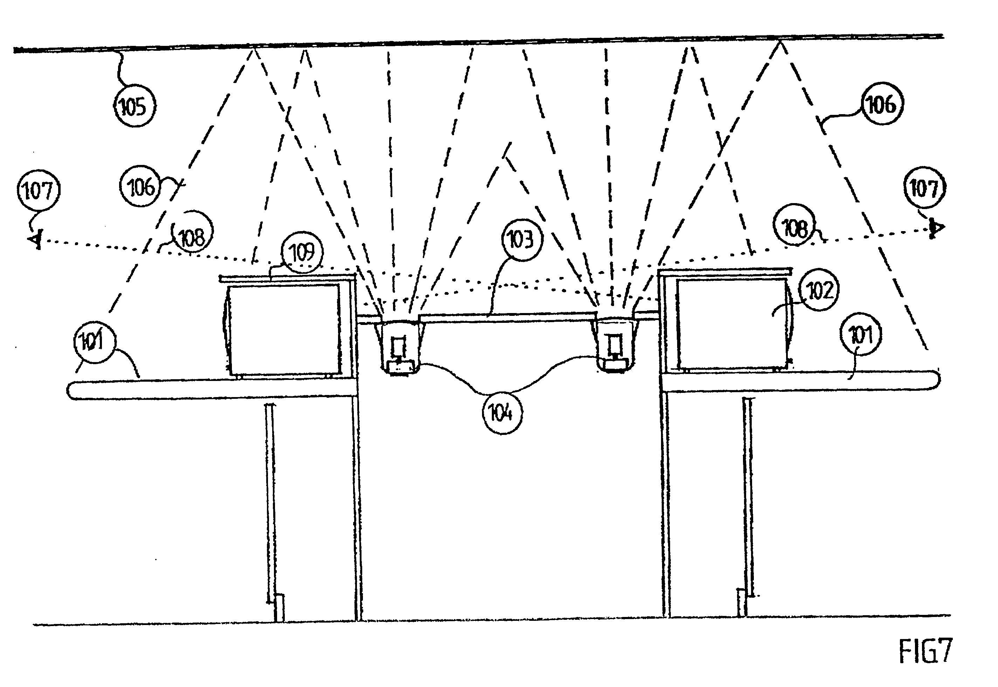

In den Fig. 6 und 7 sind eigenerfinderische Ausgestaltungen eines Arbeitsplatzes dargestellt. Dabei ist in Fig. 6 eine Draufsicht einer Arbeitsplatzanordnung mit sechs Plätzen ( drei Doppelplätzen ) dargestellt, die zu einem Dreieck zusammengesetzt sind, entlang dessen Schenkeln die Arbeitsplätze, dargestellt durch die symbolisierten Stühle, liegen. In Fig. 7 ist eine Schnittdarstellung durch die Arbeitsplatzanordnung gemäß Fig. 6 dargestellt, um die wesentlichen Merkmale besser verdeutlichen zu können.

Man erkennt zwei gegenüberliegende Arbeitsplätze, die Arbeitsplatten 101 und auch diesen angeordnete Monitore 102 umfassen. Die Monitore 102 sind durch im Schnitt als L erscheinende Monitorverkleidungen 109 eingefaßt, um eine allseitige Umspülung mit Kühlluft zu ermöglichen, die von einer nicht näher dargestellten in einer Tischmittelplatte 103 integrierten Klimatisierungseinrichtung stammen kann, wie sie in den Fig. 1 bis 5 erläutert wurde.

In der Tischmittelplatte 103 sind Leuchtkörper 104 integriert, und zwar in der dargestellten Dreiecksanordnung in den Ecken des von den Monitorreihen 102 begrenzten Dreiecks. Die Leuchtkörper 104 sind derart in der Arbeitsplatte, und zwar in der Tischmittelplatte 103 integriert, daß die Strahlung von einer oberhalb des Arbeitsplatzes abgehängten Decke 105 derart reflektiert wird, daß zum einen die Bildschirme der Monitore 102 abgeschattet und zum anderen die Arbeitsfläche der Arbeitsplatten 101 ausgeleuchtet ist. Dies soll durch den Strahlengang 106 angedeutet werden. Dabei befinden sich die Leuchtkörper 104 jedoch derart in der Tischmittelplatte 102 , daß ein unmittelbares Erfassen nicht möglich ist. Dies wird durch die Augenposition 107 und dem durch die Linie 108 gekennzeichneten Blickverlauf verdeutlicht.

Bei den Leuchtkörpern 104 kann es sich um konventionelle Elemente handeln, vorzugsweise um Halogen-Metalldampflampen, die eine hohe Leistungsfähigkeit zeigen. Dabei sind die Leuchten 104 selbst einstellbar in dem Arbeitsplatz derart eingelassen, daß die Strahlung in verschiedenen gewünschten Winkeln auf die Arbeitsplatten 101 fallen, um eine optimale Lichtausbeute bzw. Verteilung zu gewährleisten.

## Patentansprüche

1. Bildschirmarbeitsplatz mit mehreren dem Arbeitsplatz zugeordneten und im Bereich einer Arbeitsplatte (14, 16, 101) angeordneten Bildschirmgeräten (34, 36, 102), die zu dem Arbeitsplatzmobiliar beabstandet sind und von Luft umströmt werden, **gekennzeichnet** durch ein in den Arbeitsplatz (10) integriertes Klimagerät (42), das die vorbeiströmende Luft ansaugt, wobei die Bildschirmgeräte (34, 36, 102) im wesentlichen allseitig vom Arbeitsplatzmobiliar derart beabstandet sind, daß die Geräteabwärme nahezu vollständig über die vorbeiströmende Luft zum Klimagerät (42) abgeführt wird.

2. Bildschirmarbeitsplatz nach Anspruch 1, bei dem mehrere über- und/oder nebeneinander angeordnete elektronische Baueinheiten (26, 28, 32) zu dem Arbeitsplatzmobiliar beabstandet sind und von Luft umströmt werden, dadurch **gekennzeichnet**, daß die unterhalb der Arbeitsplatte (14, 16, 101) angeordneten elektronischen Baueinheiten (26, 28, 32) im wesentlichen allseitig zu dem Arbeitsplatzmobiliar beabstandet und dadurch Luftströmungswege zur im wesentlichen allseitigen Umströmung der elektronischen Baueinheiten (26, 28, 32) mit Kühlluft gebildet sind, die mit dem Klimagerät (42) verbunden sind.

3. Bildschirmarbeitsplatz nach Anspruch 1 oder 2, dadurch **gekennzeichnet** , daß zwischen der Arbeitsplatte (14, 16, 101) und dem jeweiligen Bildschirmgerät (34, 36, 102) ein Luftströmungsweg durch Anordnung derselben im Abstand voneinander gebildet ist.

4. Bildschirmarbeitsplatz nach Anspruch 2 oder 3, dadurch **gekennzeichnet**, daß dem Bildschirmarbeitsplatz (10, 54, 62) ein weiterer entsprechend ausgebildeter Bildschirmarbeitsplatz (12) oder mehrere weitere entsprechend ausgebildete Bildschirmarbeitsplätze (56, 58; 64, 66, 68; 78, 80, 82) zugeordnet sind, zwischen denen das Klimagerät (42) angeordnet ist, dessen Abluft vorzugsweise im Berührungsbereich zwischen den Bildschirmarbeitsplätzen (10, 12, 54, 56, 58, 62, 64, 66, 68, 78, 80, 82) abgebbar ist.

5. Bildschirmarbeitsplatz nach Anspruch 4, dadurch **gekennzeichnet**, daß die Bildschirmarbeitsplätze (54, 56, 58, 62, 64, 66) zu einem Vieleck zusammengestellt sind, wobei das Klimagerät (42) im wesentlichen im Mittelpunkt (60) der Bildschirmarbeitsplatzanordnung als deren integraler Bestandteil angeordnet ist.

6. Bildschirmarbeitsplatz nach Anspruch 5, dadurch **gekennzeichnet**, daß die Bildschirmarbeitsplätze (54, 56, 58) zu einem Dreieck mit einander berührenden Rückseiten zusammengestellt sind, wobei das Klimagerät (42) im Mittelpunkt (60) des Dreiecks angeordnet ist.

7. Bildschirmarbeitsplatz nach Anspruch 6, dadurch **gekennzeichnet**, daß in den Ecken (72, 74, 76) des Dreiecks weitere Bildschirmarbeitsplätze (78, 80, 82) angeordnet sind, deren Bildschirmgeräte und gegebenenfalls elektronische Baueinheiten über das im Mittelpunkt (60) angeordnete Klimagerät (42) temperierbar sind.

8. Bildschirmarbeitsplatz nach Anspruch 1 oder 2, dadurch **gekennzeichnet**, daß in den Bildschirmarbeitsplatz eine Beleuchtung (104) integriert ist, die so angeordnet ist, daß die von der Beleuchtung (104) anfallende Wärme unmittelbar durch das Klimagerät (42) abführbar ist und deren Strahlung von einer Decke (105) derart reflektierbar ist, daß die Strahlung die Frontfläche der Bildschirmgeräte (102) des Bildschirmarbeitsplatzes abschattet und die Arbeitsplatte (101) anleuchtet.

9. Bildschirmarbeitsplatz nach Anspruch 8, dadurch **gekennzeichnet**, daß die Beleuchtung (104) für den Bediener des Bildschirmarbeitsplatzes indirekt ist.

10. Bildschirmarbeitsplatz nach Anspruch 8 oder 9, dadurch **gekennzeichnet**, daß der Strahlengang (106) der Beleuchtung (104) auf den Abstand zwischen Arbeitsplatte (101) und Decke (105) einstellbar ist.

## Claims

1. Display workstation having a plurality of visual display units (34, 36, 102) assigned to the workstation and disposed in the region of a work top (14, 16, 101), said visual display units being disposed apart from the workstation furnishings and having air circulating around them, **characterised** by an air-conditioning unit (42) which is integrated into the workstation (10) and sucks in passing air, with the visual display units (34, 36, 102) basically being disposed apart from the workstation furnishings on all sides in such a manner that the waste heat of the units is almost completely removed by the air flowing past to the air-conditioning unit (42).

2. Display workstation according to claim 1, in which a plurality of electronic units (26, 28, 32) arranged above and/or adjacent to one another are disposed apart from the workstation furnishings and have air circulating around them, **characterised** in that the electronic units (26, 28, 32) disposed below the work top (14, 16, 101) are basically disposed apart from the workstation furnishings on all sides, thereby forming air flow paths for circulating cooling air substantially around all sides of the electronic units (26, 28, 32) which are connected to the air-conditioning unit (42).

3. Display workstation according to claim 1 or 2, **characterised** in that an air flow path is formed between the work top (14, 16, 101) and the relevant visual display unit (34, 36, 102) by disposing them at a distance from one another.

4. Display workstation according to claim 2 or 3, **characterised** in that there is associated with the display workstation (10, 54, 62) a further display workstation (12) of identical construction or a plurality of further display workstations (56, 58; 64, 66, 68; 78, 80, 82) of identical construction, between which is disposed the air-conditioning unit (42) whose outlet air is releasable preferably in the region of contact between the display workstations (10, 12, 54, 56, 58, 62, 64, 66, 68, 78, 80, 82).

5. Display workstation according to claim 4, **characterised** in that the display workstations (54, 56, 58, 62, 64, 66) are combined to form a polygon, with the air-conditioning unit (42) being disposed basically in the centre (60) of the display workstation arrangement as an integral part thereof.

6. Display workstation according to claim 5, **characterised** in that the display workstations (54, 56, 58) are combined with their rear sides touching to form a triangle, with the air-conditioning unit (42) being disposed in the centre (60) of the triangle.

7. Display workstation according to claim 6, **characterised** in that at the points (72, 74, 76) of the triangle further display workstations (78, 80, 82) are disposed, whose visual display units and, possibly, electronic units may be conditioned by means of the air-conditioning unit (42) disposed in the centre (60).

8. Display workstation according to claim 1 or 2, **characterised** in that there is integrated into the display workstation lighting (104) which is disposed in such a way that the heat resulting from the lighting (104) is directly removable by the air-conditioning unit (42) and its luminous radiation is reflectable by a cover (105) in such a way that the radiation shades the front surface of the visual display units (102) of the display workstation and illuminates the work top (101).

9. Display workstation according to claim 8, **characterised** in that the lighting (104) is indirect for the display workstation operator.

10. Display workstation according to claim 8 or 9, **characterised** in that the beam path (106) of the lighting (104) is adjustable to the distance between work top (101) and cover (105).

## Revendications

1. Poste de travail avec écran de visualisation, comportant plusieurs dispositifs à écran de visualisation (34, 36, 102) qui sont adjoints au poste de travail et sont agencés à proximité d'une table de travail et qui sont écartés par rapport au mobilier de poste de travail et sont entourés par un écoulement d'air, caractérisé par un dispositif de climatisation (42) qui est intégré dans le poste de travail (10) et qui aspire l'air s'écoulant à proximité, les dispositifs à écran de visualisation (34, 36, 102) étant sensiblement écartés de tous côtés du mobilier de poste de travail de façon que la chaleur perdue des dispositifs est pratiquement complètement évacuée, par l'intermédiaire de l'air s'écoulant à proximité, vers le dispositif de climatisation (42).

2. Poste de travail avec écran de visualisation suivant la revendication 1, pour lequel plusieurs éléments constitutifs électroniques (26, 28, 32) agencés l'un sur l'autre et/ou à côté de l'autre sont écartés du mobilier de poste de travail et sont entourés par un écoulement d'air, caractérisé en ce que les éléments constitutifs électroniques (26, 28, 32) agencés en dessous de la table de travail (14, 16, 101) sont sensiblement écartés de tous côtés du mobilier de poste de travail et en ce que de ce fait sont formés des chemins d'écoulement d'air, qui sont raccordés au dispositif de climatisation (42), pour entourer par écoulement, sensiblement de tous côtés, avec de l'air de refroidissement les éléments constitutifs électroniques (26, 28, 32).

3. Poste de travail avec écran de visualisation suivant l'une ou l'autre des revendications 1 et 2, caractérisé en ce qu'entre la table de travail (14, 16, 101) et le dispositif à écran de visualisation respectif (34, 36, 102) est formé un chemin d'écoulement d'air par leur agencement à distance l'un de l'autre.

4. Poste de travail avec écran de visualisation suivant l'une ou l'autre des revendications 2 et 3, caractérisé en ce qu'au poste de travail avec écran de visualisation (10, 54, 62) sont adjoints un autre poste de travail avec écran de visualisation (12) réalisé de façon correspondante ou plusieurs autres postes de travail avec écran de visualisation (56, 58; 64, 66, 68; 78, 80, 82) entre lesquels est agencé le dispositif de climatisation (42) dont l'air évacué peut être dégagé de préférence dans la zone de contact entre les postes de travail avec écran de visualisation (10, 12, 54, 56, 58, 62, 64, 66, 68, 78, 80, 82).

5. Poste de travail avec écran de visualisation suivant la revendication 4, caractérisé en ce que les postes de travail avec écran de visualisation (54, 56, 58, 62, 64, 66) sont groupés en un polygone, le dispositif de climatisation (42) étant agencé sensiblement au centre (60) de l'agencement de poste de travail avec écran de visualisation, comme constituant leur partie constitutive intégrée.

6. Poste de travail avec écran de visualisation suivant la revendication 5, caractérisé en ce que les postes de travail avec écran de visualisation (54, 56, 58) sont groupés en un triangle, avec des faces arrière qui se touchent l'une l'autre, le dispositif de climatisation (42) étant agencé au centre (60) du triangle.

7. Poste de travail avec écran de visualisation suivant la revendication 6, caractérisé en ce que dans les angles (72, 74, 76) du triangle sont agencés d'autres postes de travail avec écran de visualisation (78, 80, 82) dont les dispositifs à écran de visualisation et, le cas échéant, des éléments constitutifs électroniques peuvent être équilibrés en température par le dispositif de climatisation (42) agencé au centre (60).

8. Poste de travail avec écran de visualisation suivant l'une ou l'autre des revendications 1 et 2, caractérisé en ce que dans le poste de travail avec écran de visualisation est intégré un éclairage (104) qui est agencé de façon que la chaleur produite par l'éclairage (104) puisse être directement évacuée par le dispositif de climatisation (42) et que son rayonnement puisse être réfléchi par un plafond (105) de façon que le rayonnement mette dans l'ombre la face frontale des dispositifs à écran de visualisation (102) du poste de travail avec écran de visualisation et éclaire la table de travail (101).

9. Poste de travail avec écran de visualisation suivant la revendication 8, caractérisé en ce que l'éclairage (104) est indirect pour l'opérateur du poste de travail avec écran de visualisation.

10. Poste de travail avec écran de visualisation suivant l'une ou l'autre des revendications 8 et 9, caractérisé en ce que le trajet de rayons (106) de l'éclairage (104) est réglable sur la distance entre table de travail (101) et plafond (105).

FIG.1

FIG. 2

FIG. 3

FIG. 4

FIG. 5

FIG. 6

FIG7

EP 0 252 427 B1